# EUROPÄISCHE PATENTANMELDUNG

(11) **EP 2 221 147 A1**
(43) Veröffentlichungstag der Anmeldung: **25.08.2010**
(21) Anmeldenummer: 10001564.3
(22) Anmeldetag: 16.02.2010
(51) Int. Cl.: B25B 23/18, F21V 33/00

(54) **Werkzeug mit einem Handgriff, einem Werkzeugschaft und einem Lichtleiter**

(30) Priorität: 18.02.2009 DE 102009009419
(71) Anmelder: Wiha Werkzeuge GmbH, 78136 Schonach (DE)
(72) Erfinder: Lehmann, Ernst, v., 78087 Mönchweiler (DE)
(74) Vertreter: Modrow, Stephanie

(57) **Zusammenfassung**

Die Erfindung betrifft ein Werkzeug mit einem Handgriff, einem Werkzeugschaft und einem Lichtleiter, wobei der Handgriff drehfest mit dem Werkzeugschaft verbunden ist und der Handgriff eine Beleuchtungseinrichtung aufweist, wobei der Werkzeugschaft mit dem an ihm unlösbar verbundenen Lichtleiter auswechselbar in den Handgriff eingesetzt ist.

## Beschreibung

Die Erfindung betrifft ein Werkzeug, insbesondere einen Schraubendreher, mit einem Handgriff, einem Werkzeugschaft und einem Lichtleiter.

Schlecht beleuchtete Arbeitsumgebungen oder Arbeiten bei Dunkelheit erfordern eine gezielte Beleuchtung von Werkstücken, die es mit dem Werkzeug zu bearbeiten gilt. Beispielsweise tragen bekannte Schraubendreher diesem Erfordernis Rechnung, in dem sie mit Beleuchtungseinrichtungen ausgestattet sind.

DE 101 02 753 A1 offenbart einen Schraubendreher mit Beleuchtung. Er verfügt über einen hohlen Handgriff und darin untergebracht über eine Spannungsquelle, eine Lichtquelle, einen Schalter und eine Verkabelung. Um einen sich vom Handgriff aus in Richtung des Werkstücks erstreckenden Werkzeugschaft herum ist bis zu dessen Spitze ein Lichtleiter ausgebildet. Nachteilig erscheint unter anderem der komplexe Aufbau mit integrierter Elektrik. So ist beispielsweise ein Schalter der Beleuchtungseinrichtung im Handgriff versenkt anzubringen und mit der Beleuchtungseinrichtung zu verkabeln.

In DE 20 2006 003 352 U1 ist ein fotolumineszenter Schraubendreher offenbart. Der fotolumineszente Schraubendreher weist einen Handgriff mit einem transparenten Abschnitt auf. Im Handgriff ist ein fotolumineszentes Element derart angeordnet, dass es in Richtung des Schafts und durch den transparenten Abschnitt senkrecht zum Schaft bei Dunkelheit aus dem Handgriff herausleuchtet, wenn während des Tages genügend Sonnenlicht absorbiert worden ist.

DE 10 2006 013 118 A1 offenbart einen LED-Schraubendreher mit einer LED am stirnseitigen Schaftende eines Handgriffs mit Ausrichtung in Richtung des Werkzeugschafts.

Vor dem Hintergrund der oben genannten, bekannten Werkzeuge besteht die Aufgabe der Erfindung darin, ein Werkzeug mit einer Beleuchtungseinrichtung zur Verfügung zu stellen, dass eine gute Beleuchtung des Werkstücks ermöglicht.

Diese Aufgabe wird erfindungsgemäß gelöst durch ein Werkzeug mit den Merkmalen des Anspruchs 1, einen Werkzeugschaft mit den Merkmalen des Anspruchs 20 und einen Handgriff mit den Merkmalen des Anspruchs 22.

Vorteilhafte Ausführungen der Erfindung sind in jeweiligen Unteransprüchen angegeben.

Das Werkzeug weist neben dem Handgriff einen Werkzeugschaft und einen Lichtleiter auf. Der Handgriff ist drehfest mit dem Werkzeugschaft verbunden. Der Werkzeugschaft ist unlösbar mit dem Lichtleiter verbunden und bildet gemeinsam mit dem Lichtleiter eine auswechselbare Einheit, die drehfest in den Handgriff eingesetzt ist.

Das erfindungsgemäße Werkzeug weist im Handgriff eine Beleuchtungseinrichtung auf, die in eine Richtung aus dem Handgriff heraus zum Werkstück hin leuchtendes Licht zur Verfügung stellt. Wenn der Werkzeugschaft mit dem an ihm unlösbar verbundenen Lichtleiter in den Handgriff eingesetzt ist, wird das aus dem Handgriff herausleuchtende Licht in den Lichtleiter eingekoppelt und nahezu parallel zum Werkzeugschaft in Richtung des Werkstücks gerichtet.

Das erfindungsgemäße Werkzeug stellt dem Anwender somit einen auswechselbaren Werkzeugschaft mit der Möglichkeit zur Verfügung, verschiedene Werkzeugschäfte mit unterschiedlichen Verwendungszwecken einzusetzen, die alle einen fest verbundenen Lichtleiter aufweisen, mit dem sie in gleicher Art und Weise in den Handgriff eingesetzt werden.

Der in den Handgriff eingesetzte Lichtleiter befindet sich in einem Arbeitszustand geschützt innerhalb des Handgriffs und bildet beispielsweise nur mit einer zumindest abschnittsweise ringförmigen Oberfläche dem Werkstück zugewandt einen Teil der Oberfläche des Werkzeugs im Übergangsbereich zwischen Handgriff und Werkzeugschaft. Somit ist der Lichtleiter kaum äußeren Einflüssen ausgesetzt, die den Lichtleiter beschädigen könnten, beispielsweise durch Verschmutzungen oder mechanische Einflüsse.

Eine vorteilhafte Ausführungsform sieht vor, dass die drehfeste Verbindung zwischen Handgriff und Werkzeugschaft über eine formschlüssige Verbindung zwischen Handgriff und Lichtleiter geschieht.

Somit ist eine besonders vorteilhafte Möglichkeit gewählt, den Lichtleiter auswechselbar in den Handgriff einzusetzen, weil schon das passende Einsetzen bezüglich der miteinander formschlüssigen Konturen die drehfeste Verbindung herstellt.

In einer vorteilhaften Ausführungsform ist vorgesehen, dass der Lichtleiter aus aufgespritztem Kunststoff besteht.

Vorteilhaft hierbei ist, dass durch das Aufspritzen des Kunststoffs auf den Lichtleiter die unlösbare Verbindung zwischen Werkzeugschaft und Lichtleiter entsteht, ohne dass ein zusätzliches Verkleben von zwei Bauteilen erforderlich wäre. Außerdem ist es vorteilhaft, dass der aufgespritzte Kunststoff selbst die lichtleitende Funktion übernehmen kann. Der Lichtleiter ist auf diese Art kostengünstig hergestellt.

In einer vorteilhaften Ausführungsform ist vorgesehen, dass der Lichtleiter den Werkzeugschaft in einem Bereich, der an einem der Beleuchtungseinrichtung zugewandten Ende beginnt, vollumfänglich umgibt. In besonders vorteilhaften Ausführungsformen umgibt der Lichtleiter den Werkzeugschaft in jedem Bereich vollumfänglich.

Somit entsteht eine geschlossen ringförmige Oberfläche, durch die das Licht aus dem Handgriff in Richtung des Werkstückes austritt. Dadurch wird der Schatten minimiert, welcher die Beleuchtung des Werkstücks erschwert, weil die ringförmige Oberfläche in Umfangsrichtung nicht lichtdicht unterbrochen ist.

In einer vorteilhaften Ausführungsform ist vorgesehen, dass der Werkzeugschaft ein der Beleuchtungseinrichtung zugewandetes Ende mit einem sich verjüngenden Querschnitt aufweist.

Das Licht aus der Beleuchtungseinrichtung muss in den Lichtleiter eingekoppelt werden können und um den Werkzeugschaft in Richtung des Werkstücks verteilt werden. Eine Ausbildung des der Beleuchtungseinrichtung zugewandten Endes des Werkzeugschafts mit einem sich verjüngenden Querschnitt ermöglicht ein nahezu ungehindertes Ausbreiten der Lichtstrahlen um den Werkzeugschaft herum.

In einer vorteilhaften Ausführungsform ist das Ende des Werkzeugschafts als eine Spitze ausgebildet.

Hierdurch ist gewährleistet, dass das Licht nicht an einer senkrecht zur Längsachse stehenden und der Beleuchtungseinrichtung entgegen gerichteten Oberfläche reflektiert wird, sondern sich um den Werkzeugschaft herum verteilt.

In einer vorteilhaften Ausführungsform weist die Beleuchtungseinrichtung eine Spannungsquelle, eine Lichtquelle, eine Verkabelung und einen Schalter in einer auswechselbaren Baugruppe auf.

Vorteilhaft ist, dass ein vollständiges elektrisches Gerät in dem Werkzeug aufgenommen werden kann, ohne dass Modifikationen an ihm vorgenommen werden müssen. Es entsteht also bezüglich dieser Einheit kein Aufwand beim Werkzeughersteller, auch nicht bezüglich der Einhaltung von üblichen Standards. Außerdem bietet diese Ausführungsform Kostenvorteile. Beispielsweise kann eine handelsübliche Taschenlampe in den Handgriff eingesetzt sein, die auch für sich genommen eine voll funktionstüchtige Einheit bildet.

Die Beleuchtungseinrichtung weist vorteilhaft eine Leuchtdiode (LED) als Leuchtquelle auf. Leuchtdioden sind besonders energiesparend. Da es sich um eine batteriebetriebene Beleuchtungseinrichtung handeln kann, ist es besonders vorteilhaft, auf energiesparende Leuchtmittel zu achten. Es kommen auch alternative Varianten für energiesparende Leuchtquellen statt einer LED in Frage.

In einer vorteilhaften Ausführungsform ist vorgesehen, dass der Handgriff eine Schalthülse aufweist, mittels derer die Beleuchtungseinrichtung betätigbar ist.

Mit der Schalthülse ist ein Mittel zum Ein- und Ausschalten der Beleuchtungseinrichtung im Handgriff vorgesehen. Die Betätigung der Beleuchtungseinrichtung geschieht demnach nicht direkt an dem Schalter der Beleuchtungseinrichtung selbst, sondern indirekt von außen am Handgriff über das von außen betätigbare Mittel der Schalthülse. Somit muss die Beleuchtungseinrichtung im Bereich des Schalters nicht frei zugänglich im Handgriff aufgenommen sein. Entsprechende Ausnehmungen und Versenkungen im Handgriff sind nicht vorzusehen. Das System des Handgriffs bleibt somit um die Beleuchtungseinrichtung herum verschlossen. Dabei bleibt die Beleuchtungseinrichtung dennoch betätigbar, da hierfür die Schalthülse genutzt werden kann.

In einer vorteilhaften Ausführungsform ist vorgesehen, dass die Beleuchtungseinrichtung im Handgriff axial fixiert ist. Insbesondere ist darüber hinaus vorgesehen, dass der Lichtleiter die Beleuchtungseinrichtung in axialer Richtung von dem Werkzeugschaft beabstandet.

Eine Fixierung in axialer Richtung im Handgriff ist besonders vorteilhaft, weil bei einem Wechsel des Werkzeugschafts die Beleuchtungseinrichtung fixiert bleibt.

Wird der Werkzeugschaft mit dem Lichtleiter eingesetzt, kommt der Lichtleiter in Kontakt mit der Beleuchtungseinrichtung und beabstandet ggf. den Werkzeugschaft in axialer Richtung von der Beleuchtungseinrichtung, die fest in dem Handgriff fixiert ist. Da es oft vorkommt, dass Kräfte in axialer Richtung auf das Werkzeug wirken, ist es vorteilhaft, den Kraftfluss vom Handgriff in den Werkzeugschaft einzuleiten, ohne dass ein Spiel zwischen den axial miteinander in Verbindung stehenden Komponenten des Werkzeugs vorhanden ist. Dies gilt auch für die Beleuchtungseinrichtung, die vorteilhaft nicht lose in dem Handgriff ohne festen Bezug zum Lichtleiter in dem Handgriff aufgenommen sein soll.

In einer vorteilhaften Ausführungsform ist der Werkzeugschaft beschichtet, insbesondere verchromt. Alternativ oder zusätzlich kann der Lichtleiter beschichtet sein, insbesondere galvanisiert. Alternativ oder zusätzlich ist der Handgriff innen beschichtet, insbesondere galvanisiert.

In einer vorteilhaften Ausführungsform ist ein nahezu vollständig umlaufender Luftspalt radial zwischen dem Handgriff und dem Lichtleiter ausgebildet.

Auch hierbei geht es darum, den Lichtleiter vorteilhaft auszubilden bzw. aufzunehmen. Gerade an den Grenzflächen zwischen Kunststoff und Luft, also zwischen Lichtleiter und Luftspalt kommt es zu Brechungen bzw. Reflektionen des Lichts an Grenzflächen, sodass die lichtleitenden Eigenschaften des Lichtleiters verbessert werden.

Besonders vorteilhaft können radial zwischen dem Handgriff und dem Lichtleiter mindestens drei sich in axialer Richtung erstreckende Stege angeordnet sein, welcher in einfacher Art und Weise für eine radiale Beabstandung zwischen dem Handgriff und dem Lichtleiter sorgt.

In einer vorteilhaften Ausführungsform ist vorgesehen, dass die Beleuchtungseinrichtung auswechselbar, insbesondere durch das zweite Handgriffende hindurch entfernbar, im Handgriff aufgenommen ist.

Damit ist es vorteilhaft gelöst, dass Beleuchtungseinrichtung und Werkzeugschaft in unterschiedlichen Richtungen in den Handgriff einsetzbar sind. Gerade wenn eine axiale Fixierung von Beleuchtungseinrichtung und/oder Werkzeugschaft im Handgriff vorgesehen ist, ist es vorteilhaft, diese beiden Einsätze in unterschiedlichen Richtungen in den Handgriff einzusetzen. Das zweite Handgriffende ist auch deswegen für das Auswechseln der Beleuchtungseinrichtung vorteilhaft, weil der Handgriff hier nur minimal in seiner Stabilität geschwächt wird.

In einer vorteilhaften Ausführungsform ist vorgesehen, dass das Werkzeug elektrisch ableitend ausgeführt ist und aus mindestens einem leitfähigen Material besteht.

Somit verhindert das Werkzeug, dass es zur elektrostatischen Aufladung kommt. Es ist als ESD-fähig zu bezeichnen.

In einer weiteren vorteilhaften Ausführungsform ist das Werkzeug über nahezu seine gesamte Oberfläche isolierend ausgeführt.

Gerade für den Einsatz des Werkzeugs bei Elektroinstallationen ist eine Isolation gegenüber elektrischer Ladung vorteilhaft.

In einer vorteilhaften Ausführungsform des erfindungsgemäßen Werkzeugschafts für das Werkzeug ist der Werkzeugschaft über einen Rastmechanismus in dem Handgriff verriegelbar.

Solche Verriegelungen sind besonders vorteilhaft für eine sichere Aufnahme der auswechselbaren Werkzeugschafte in dem Werkzeug. Das trägt zur Arbeitssicherheit bei.

In einer vorteilhaften Ausführungsform des Handgriffs für das Werkzeug ist vorgesehen, dass der Handgriff eine Öffnung aufweist, in welche der Werkzeugschaft oder eine Linse auswechselbar einsetzbar sind.

Besonders vorteilhaft hierbei ist, dass der Handgriff entweder als Werkzeughandgriff oder beispielsweise als Taschenlampe funktionieren kann, wobei die Linse eine Beleuchtung optimiert.

Ein Ausführungsbeispiel der Erfindung wird nachfolgend anhand von Figuren näher erläutert. In den Figuren sind gleiche Teile mit gleichen Bezugszeichen gekennzeichnet. Es zeigen:
- Fig. 1: eine perspektivische Darstellung eines erfindungsgemäßen Werkzeugs mit Handgriff, Beleuchtungseinrichtung, Werkzeugschaft und Lichtleiter, wobei der Handgriff entlang der Längsachse geschnitten ist,
- Fig. 2: eine perspektivische Darstellung des Werkzeugs gemäß Figur 1, wobei außer dem Handgriff auch der eingesetzte Lichtleiter entlang der Längsachse geschnitten dargestellt ist,
- Fig. 3: eine perspektivische Darstellung eines Griffvorderteils des Handgriffs gemäß Figur 1, wobei das Griffvorderteil abschnittsweise entlang der Längsachse geschnitten dargestellt ist,
- Fig. 4: eine perspektivische Darstellung eines Griffhinterteils des Handgriffs gemäß Figur 1, wobei zwei Schnitte entlang der Längsachse in das Griffhinterteil einen Einblick in das Griffhinterteil erlauben,
- Fig. 5: eine perspektivische Darstellung einer Kappe des Werkzeugs aus Figur 1,
- Fig. 6: eine perspektivische Darstellung eines Kappenverschlusses der Kappe aus Figur 5,
- Fig. 7: ein Axialschnitt durch einen Abschnitt des Werkzeugs aus Figur 1,
- Fig. 8: einen Radialschnitt durch den Abschnitt aus Figur 7 entlang der Linie A-A,
- Fig. 9: eine perspektivische Darstellung des Werkzeugschafts aus Figur 1,
- Fig. 10: eine perspektivische Darstellung des Werkzeugschafts aus Figur 9, wobei der Lichtleiter entlang der Längsachse geschnitten ist, und
- Fig. 11: eine perspektivische Ansicht gemäß Figur 10 mit eingezeichnetem Lichtstrahl.

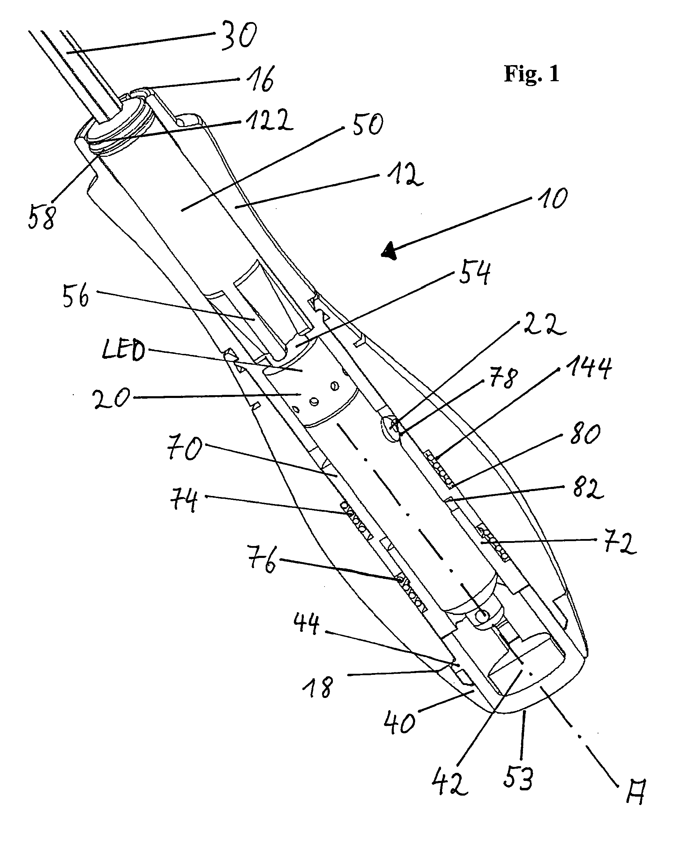

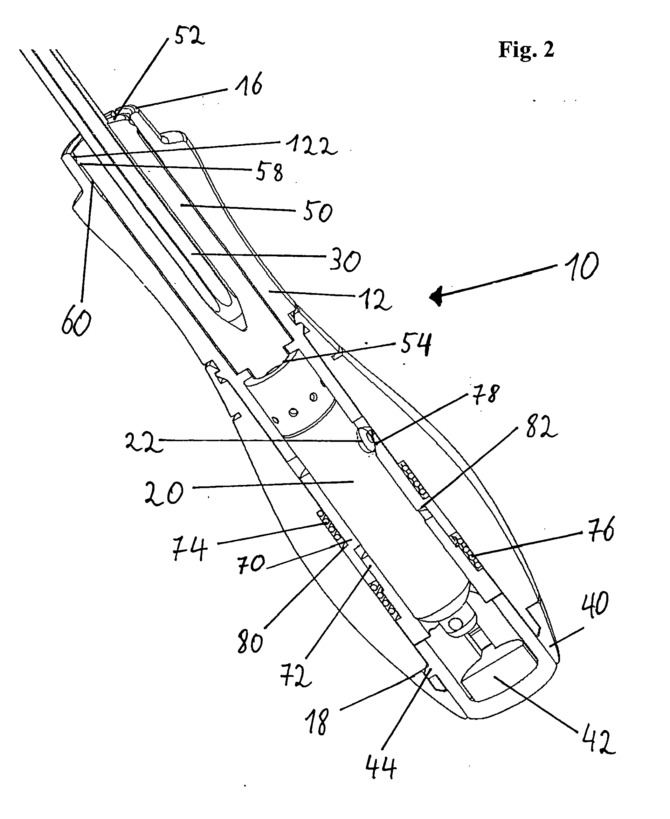

Die Figuren 1 und 2 zeigen ein Werkzeug, insbesondere einen Schraubendreher, mit einem Handgriff 10, der einen Werkzeugschaft 30 drehfest aufnimmt. Der Handgriff 10 weist entlang einer Längsachse A dem Werkzeugschaft 30 zugewandt ein erstes Handgriffende 16 und dem Werkzeugschaft 30 abgewandt ein zweites Handgriffende 18 auf. Der Handgriff 10 weist zwischen den Handgriffenden 16, 18 ineinandergreifend dem Werkzeugschaft 30 zugewandt ein Griffvorderteil 12 und dem Werkzeugschaft 30 abgewandt ein Griffhinterteil 14 auf.

Die drehfeste Verbindung zwischen dem Werkzeugschaft 30 und dem Handgriff 10 ist über einen Lichtleiter 50 hergestellt. Der Lichtleiter 50 umgibt ein dem Handgriff 10 zugewandtes Ende des Werkzeugschafts 30 vollumfänglich. Der Lichtleiter 50 ist in dem Griffvorderteil 12 aufgenommen und drehfest mit dem Griffvorderteil 12 verbunden.

Eine erste drehfeste Verbindung besteht zwischen dem Lichtleiter 50 und dem Werkzeugschaft 30 durch Formschluss zwischen einer Kontur 32 des Werkzeugschafts 30 und einem um diese Kontur 32 umspritzten Kunststoff, aus dem der Lichtleiter 50 besteht.

Eine zweite drehfeste Verbindung besteht zwischen dem Lichtleiter 50 und dem Griffvorderteil 12. Axiale Rippen 56 am Außenumfang, welche insbesondere von einem der Beleuchtungseinrichtung 20 zugewandten Ende des Lichtleiters 50 ausgehen, greifen in bezüglich der Formgebung entsprechend ausgebildete Rippenaufnahmen 124 des Griffvorderteils 12 ein. Ein mit der Hand auf den Handgriff 10 aufgebrachtes Drehmoment wirkt über die Rippenaufnahmen 124 auf die Rippen 56 und über den Lichtleiter 50 auf die Kontur 32 des Werkzeugschafts 30.

An einem dem Werkzeugschaft 30 abgewandten Ende des Griffvorderteils 12 wird das Griffvorderteil 12 in einem Übergangsabschnitt von dem Griffhinterteil 14 umschlossen. Zwischen Griffvorderteil 12 und Griffhinterteil 14 muss eine Übertragung des Drehmoments stattfinden können. Daher ist über eine axiale Nut 126 in dem Griffvorderteil 12 eine Aufnahme für eine Innenkontur des Griffhinterteils 14 zur Herstellung einer drehfesten Verbindung vorgesehen. In dem Übergangsabschnitt greifen das Griffhinterteil 14 und das Griffvorderteil 12 derart formschlüssig ineinander ein, dass sie axial aneinander fixiert sind.

In dem dem Werkzeugschaft 30 abgewandten Ende des Griffvorderteils 12 ist eine handelsübliche Beleuchtungseinrichtung 20 teilweise aufgenommen. In dem Griffvorderteil 12 besteht ein unmittelbarer Kontakt zwischen dem Lichtleiter 50 und der Beleuchtungseinrichtung 20. Würde der unmittelbare Kontakt nicht bestehen, käme aus der Beleuchtungseinrichtung 20 strahlendes Licht auch in Kontakt mit anderen Komponenten des Handgriffs 10. Der unmittelbare Kontakt ist vorteilhaft, da das Licht der Beleuchtungseinrichtung 20 nicht an Wänden von anderen Komponenten absorbiert werden kann. Der Lichtleiter 50 beabstandet dabei die Beleuchtungseinrichtung 20 in axialer Richtung von dem Werkzeugschaft 30.

Die Beleuchtungseinrichtung 20 ragt zum überwiegenden Teil aus dem Griffvorderteil 12 hinaus in das Griffhinterteil 14 hinein. Die Beleuchtungseinrichtung 20 weist eine Spannungsquelle, eine Lichtquelle, eine Verkabelung und einen Schalter 22 in einer auswechselbaren Baugruppe auf. In dem dargestellten Ausführungsbeispiel handelt es sich bei der Beleuchtungseinrichtung 20 um eine handelsübliche LED-Lampe mit einer Leuchtdiode (LED) als Lichtquelle. Die Verkabelung, die Spannungsquelle und die LED sind in den perspektivischen Darstellungen der Beleuchtungseinrichtung 20 nicht erkennbar.

An der Beleuchtungseinrichtung 20 befindet sich zum Ein- und Ausschalten ein Schalter 22. Der Schalter 22 ist in einem umlaufenden Spalt zwischen dem Griffhinterteil 14 und einer Schalthülse 70 des Handgriffs 10 vorgesehen. In Richtung des zweiten Handgriffendes 18 ist angrenzend an den Schalter 22 die Schalthülse 70 in einem umlaufenden Zwischenraum zwischen dem Griffhinterteil 14 und der Beleuchtungseinrichtung 20 angeordnet. Die Schalthülse 70 ist zum Ein- und Ausschalten der Beleuchtungseinrichtung 20 axial verschieblich um die Beleuchtungseinrichtung 20 herum im Griffhinterteil 14 gelagert.

Mit einer nach radial außen verlaufenden Schräge 78 bezüglich der Längsachse A überragt die Schalthülse 70 den Schalter 22 radial. Die Schalthülse 70 gerät in eine Schaltposition, wenn sie axial in Richtung des Werkzeugschafts 30 verschoben wird. Dann schiebt sich die Schräge 78 über den Schalter 22 und drückt ihn nach radial innen in die Beleuchtungseinrichtung 20 hinein. Somit wurde der Schalter 22 betätigt. Wenn die Schalthülse 70 sich in axialer Richtung vom Werkzeugschaft weg bewegt, gerät sie in eine Ruheposition. Damit ist der Schalter 22 wieder freigegeben. Der Schalter 22 kann wieder radial nach außen aus der Beleuchtungseinrichtung 20 heraustreten.

Zwischen dem Griffhinterteil 14 und der Schalthülse 70 befindet sich in einer Kammer 144 eine erste Feder 74, welche eine Federkraft in Richtung zum zweiten Handgriffende 18 auf die Schalthülse 70 ausübt, wenn sich die Schalthülse 70 in der Schaltposition befindet. Die erste Feder 74 ist entspannt, wenn sich die Schalthülse 70 in der Ruheposition befindet.

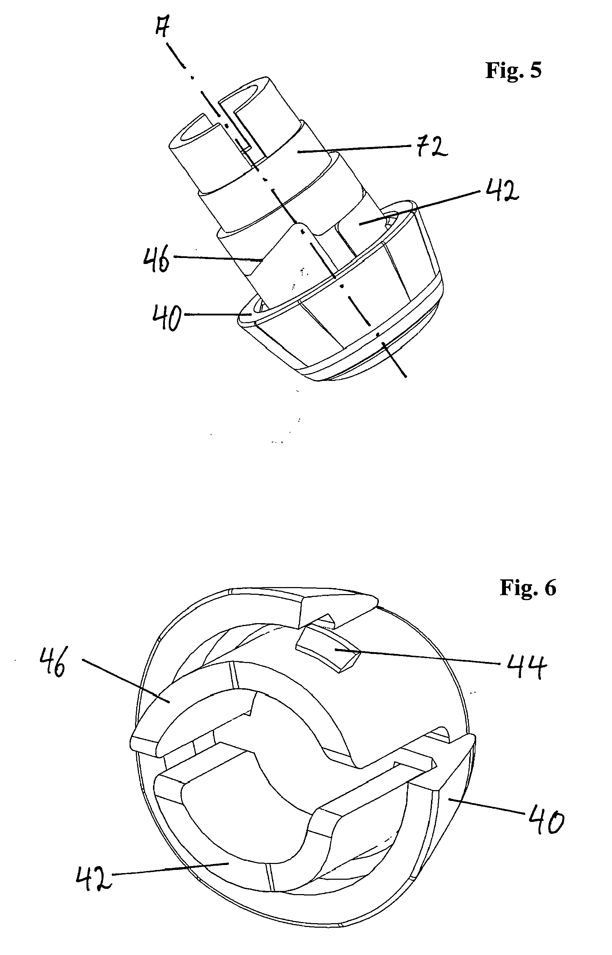

Die Beleuchtungseinrichtung 20 ist axial am zweiten Handgriffende 18 in einer Kappe 40 abgestützt. Die Kappe 40 schließt das zweite Handgriffende 18 des Griffhinterteils 14. Die Kappe 40 umfasst einen Kappenverschluss 42, der mit einem Verschlusshaken 44 von radial außen hinter radial innere Griffkerben 142 des Griffhinterteils 14 am zweiten Handgriffende 18 eingreift. Die Kappe 40 ist in den Figuren 5 und 6 zusätzlich separat dargestellt.

Bei geöffneter Kappe 40 kann die Beleuchtungseinrichtung 20 in axialer Richtung aus dem Handgriff entnommen oder eingesetzt werden. Dies kann zwecks Batteriewechsels notwendig sein. Beispielsweise kann alternativ in einer weiteren vorteilhaften Ausführungsform die Beleuchtungseinrichtung 20 bei verschlossener Kappe 40 axial in entgegengesetzter Richtung entnommen werden. Dazu ist das Griffhinterteil 14 vom Griffvorderteil 12 abziehbar ausgeführt. Wird das Griffhinterteil 14 vom Griffvorderteil 12 abgezogen, ist die Beleuchtungseinrichtung 20 entnehmbar.

In weiteren vorteilhaften Ausführungsformen ist ein Batteriewechsel nicht mehr nötig, da die Beleuchtungseinrichtung 20 eine aufladbare Batterie aufweist. Zur Unterstützung eines Aufladevorgangs können Kontakte von der Beleuchtungseinrichtung 20 zur Außenseite des Handgriffs 10 geführt sein, sodass ein Anschluss an eine Ladestation, analog zu Aufladevorgängen bei Mobilfunkgeräten oder elektrischen Zahnbürsten, vorgesehen ist.

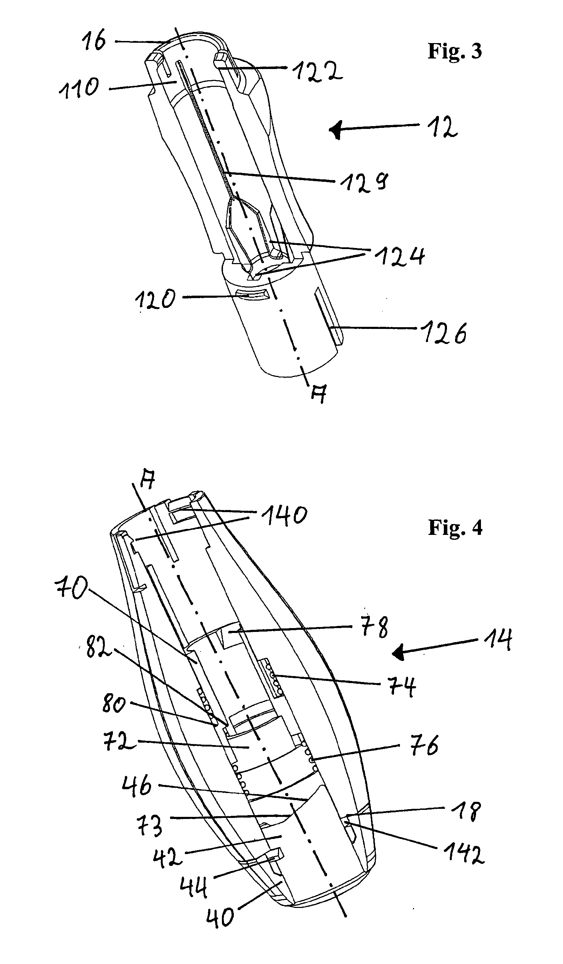

Zwischen der Kappe 40 und der Schalthülse 70 findet eine Kraftübertragung über eine Schalthülsenverlängerung 72 in axialer Richtung statt. Zwischen der Schalthülsenverlängerung 72 und der Schalthülse 70 befindet sich gemäß Figur 4 ein zweites federndes Element 76 in axialer Richtung zum Ausgleich von Fertigungstoleranzen und Montagetoleranzen für die Montage der Beleuchtungseinrichtung 20 bezüglich des Griffhinterteils 14.

Eine Drehung der Kappe 40 um die Längsachse A verschiebt erste Führungsschrägen 46 der Kappe 40 gegen zweite Führungsschrägen 73 der Schalthülsenverlängerung 72, die in Umfangsrichtung verlaufen aber in axialer Richtung schräg in Richtung Werkzeugschaft ausgerichtet sind. Die Führungsschrägen 46, 73 verlaufen etwa über den halben Umfang in der Kappe 40 bzw. auf der Schalthülsenverlängerung 72.

Eine Drehung der Kappe 40 bewirkt somit ein Umschalten zwischen Schaltposition und Ruheposition der Schalthülse 70, weil die Drehbewegung der Kappe 40 in eine axiale Verschiebung der Schalthülsenverlängerung 72 und somit auch der Schalthülse 70 umgewandelt wird.

Das Griffvorderteil 12 ist in einer teilweise geschnittenen Darstellung in Figur 3 separat dargestellt. In dieser Darstellung ist erkennbar, in welcher Weise der Lichtleiter 50 im Griffvorderteil 12 aufgenommen wird. In axialer Richtung tauchen die Rippen 56 des Lichtleiters 50 in Rippenaufnahmen 124 des Griffvorderteils 12 ein, wenn der Lichtleiter 50 in den Handgriff 10 eingeschoben wird. Die Rippen 56 sind lediglich an dem Außenumfang des Lichtleiters 50 an dem dem Werkzeugschaft 30 abgewandten Ende des Lichtleiters 50 vorgesehen, während der Lichtleiter 50 ansonsten eine zylindrische Form bis zu dem dem Werkzeugschaft 30 zugewandten Ende aufweist.

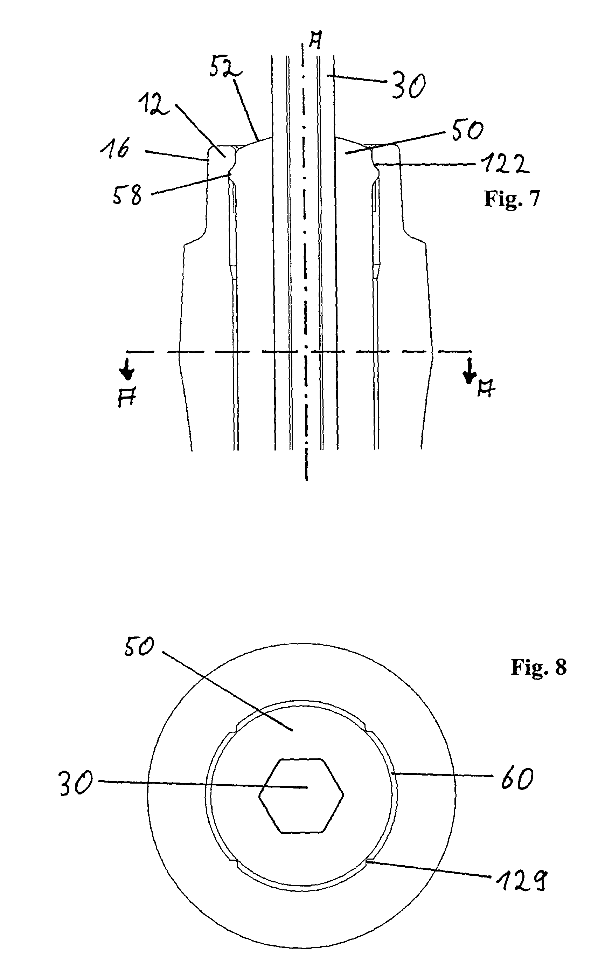

Das dem Werkzeugschaft 30 zugewandte Ende des Lichtleiters 50 befindet sich auf einer axialen Höhe mit dem ersten Handgriffende 16, wenn der Lichtleiter 50 in den Handgriff 10 eingesetzt ist. Am ersten Handgriffende 16 findet ein Einrasten von am Innenumfang des Griffvorderteils 12 angeordneten Rastnasen 122 in einer Öffnung 110 des Griffvorderteils 12 hinter einem radial nach außen hervorstehenden Bund 58 des Lichtleiters 50 statt, wodurch der Lichtleiter 50 in axialer Richtung im Handgriff 10 gefasst ist (vgl. Figur 7). Alternativ ist statt des Werkzeugschafts 30 eine Linse auswechselbar in die Öffnung 110 eingesetzt.

Über den Großteil der axialen Länge des Lichtleiters 50 erstreckt sich zwischen dem Lichtleiter 50 und dem Griffvorderteil 12 ein Luftspalt 60, der an wenigen Positionen über den Umfang verteilt durch vier Stege 129 des Griffvorderteils 12 unterbrochen ist. Die Stege 129 erstrecken sich in dem Luftspalt 60 über einen Großteil der axialen Länge des Lichtleiters 50. Die Stege 129 beabstanden den Lichtleiter 50 in radialer Richtung - von den Stegen 129 selbst abgesehen - von dem Griffvorderteil 12 derart, dass der Luftspalt 60 nahezu kreisringförmig um den Lichtleiter 50 ausgebildet ist (vgl. Figur 8).

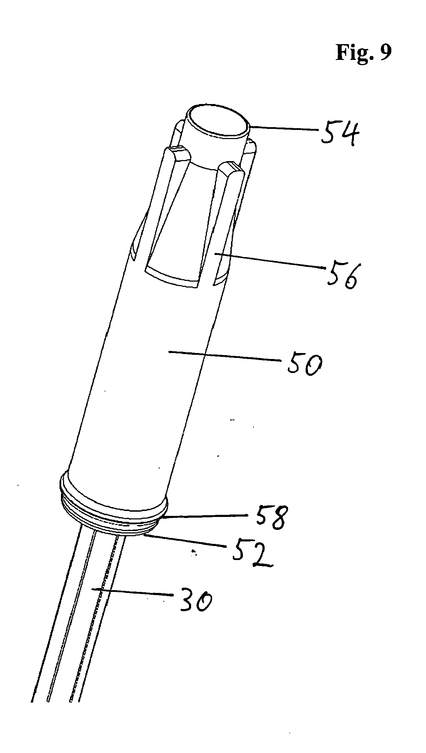

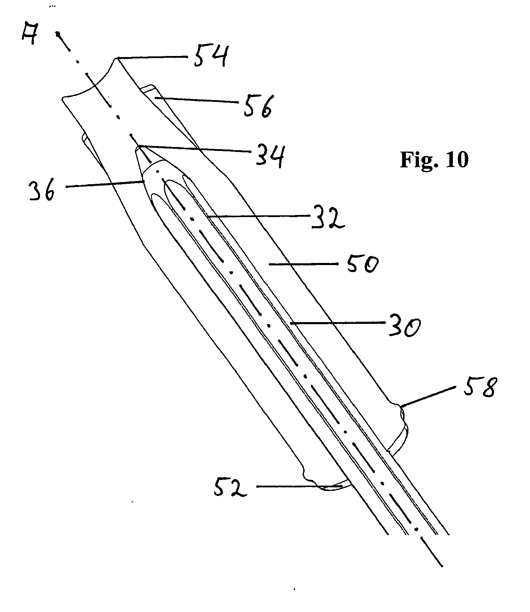

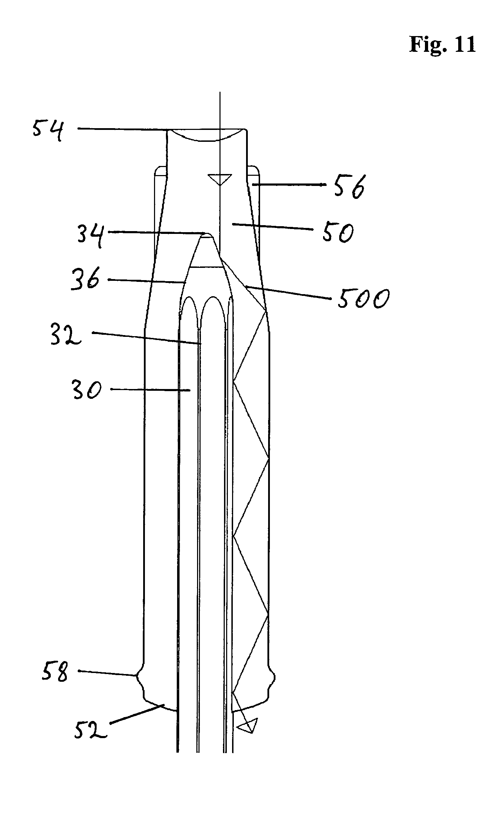

In den Figuren 7 bis 11 ist der Lichtleiter 50, seine Aufnahme in das Griffvorderteil 12 (Figuren 7 und 8), der in dem Lichtleiter 50 aufgenommene Werkzeugschaft 30 (Figuren 9 und 10) sowie durch den Lichtleiter 50 geleitete Lichtstrahlen 500 (Figur 11) näher dargestellt.

In Figur 8 ist ein Radialschnitt senkrecht zur Längsachse A an der in Figur 7 eingezeichneten Position A-A dargestellt. In Figur 8 ist besonders deutlich zu erkennen, wie der Werkzeugschaft 30 formschlüssig über eine sechseckige Kontur seines Querschnitts in dem Lichtleiter 50 drehfest aufgenommen ist. Ebenso deutlich ist der zwischen dem Lichtleiter 50 und dem Griffvorderteil 12 ausgebildete Luftspalt 60 zu erkennen.

Figur 9 bietet eine perspektivische Darstellung auf den Lichtleiter 50 mit dem darin aufgenommenen Werkzeugschaft 30. Besonders deutlich ist zu erkennen, dass der Lichtleiter 50 an dem Beleuchtungsende 54 mit kreisrundem Querschnitt ausgebildet ist. Die Ausbildung des Lichtleiters 50 an dem Beleuchtungsende 54 entspricht etwa der zylindrischen Form der Beleuchtungseinrichtung 20 des dargestellten Ausführungsbeispiels. So kommt es zu einer abgeschirmten Einkoppelung des Lichts in den Lichtleiter 50. Das Beleuchtungsende 54 reicht bis zur Beleuchtungseinrichtung 20 hin, deren axiale Fixierung radial außerhalb des Beleuchtungsendes 54 liegt.

In den Figuren 10 und 11 ist der Lichtleiter 50 aus Figur 9 entlang der Längsachse A geschnitten, so dass der darin aufgenommene Werkzeugschaft 30 ungeschnitten offen liegt. Auch der Werkzeugschaft 30 ist besonders vorteilhaft ausgebildet, um die Lichtleitung durch den Lichtleiter 50 zu optimieren. Hierzu ist in Figur 11 ein Lichtstrahl 500 als Repräsentant für das aus der Beleuchtungseinrichtung 20 in den Lichtleiter 50 eingekoppelten Lichtbündel dargestellt.

Der Lichtstrahl 500 trifft auf einen konischen Abschnitt 36 des Werkzeugschafts 30 auf. Der konische Abschnitt 36 befindet sich an dem dem Handgriff 10 zugewandten Ende des Werkzeugschafts 30 in einem Bereich, in dem sich der Querschnitt des Werkzeugschafts 30 in axialer Richtung hin zu einer Spitze an einem der Beleuchtungseinrichtung 20 zugewandten Ende 34 des Werkzeugschafts verjüngt. Die Spitze ist besonders vorteilhaft abgerundet ausgeführt, sodass von der Spitze aus eine Rissbildung in das Material des Lichtleiters 50 hinein möglichst vermieden wird. Dies könnte insbesondere dann der Fall sein, wenn Druck in axialer Richtung stoßartig auf das Werkzeug aufgebracht wird.

Der Werkzeugschaft 30 ist derart beschichtet, dass die auf ihn auftreffenden Lichtstrahlen 500 an ihm reflektiert werden. In vorteilhaften Ausführungsformen ist der Werkzeugschaft 30 verchromt. Auch der Lichtleiter 50 ist innen derart beschichtet und in vorteilhaften Ausführungsformen innen galvanisiert. Statt des Lichtleiters 50 ist in vorteilhaften Ausführungsformen der Handgriff 10 innen derart beschichtet und besonders vorteilhaft galvanisiert. In solchen Ausführungsformen übernimmt der Handgriff 10 die lichtleitende Funktion des Lichtleiters 50.

Der Lichtstrahl 500 wird an dem Lichtleiter 50 reflektiert und trifft an seiner Grenzfläche zum Luftspalt 60 auf eine Außenwand des Lichtleiters 50 auf. Dort wird der Lichtstrahl 500 nach innen reflektiert. So geht der Weg des Lichtstrahls 500 über Mehrfachreflexion bis zu einer ringförmigen Lichtaustrittsfläche am Schaftende 52. Dort tritt der Lichtstrahl 500 aus dem Werkzeug aus. Zum größten Teil sollten die Lichtstrahlen 500 in Richtung Werkstück ausgerichtet sein. Um die Ausrichtung der Lichtstrahlen 500 zu optimieren, ist die ringförmige Austrittsfläche besonders vorteilhaft als ringförmige Linse geformt, sodass die Lichtstrahlen 500 parallel zum Werkzeugschaft 30 ausgerichtet werden.

Das Werkzeug ist besonders vorteilhaft elektrisch ableitend ausgeführt und besteht aus mindestens einem leitfähigen Material. Alternativ oder zusätzlich kann das Werkzeug isolierend ausgebildet sein, sodass der Anwender bei Elektroinstallationen vor Stromschlägen geschützt ist.

### Bezugszeichenliste

- 10: Handgriff
- 12: Griffvorderteil
- 14: Griffhinterteil
- 16: erstes Handgriffende
- 18: zweites Handgriffende

- 20: Beleuchtungseinrichtung
- 22: Schalter

- 30: Werkzeugschaft
- 32: Kontur
- 34: Ende
- 36: Abschnitt

- 40: Kappe
- 42: Kappenverschluss
- 44: Verschlusshaken
- 46: Führungsschräge

- 50: Lichtleiter
- 52: Schaftende
- 54: Beleuchtungsende
- 56: Rippen
- 58: Bund

- 60: Luftspalt

- 70: Schalthülse
- 72: Schalthülsenverlängerung
- 73: Führungsschräge
- 74: erste Feder
- 76: zweite Feder
- 78: Schräge

- 80: Vorsprung
- 82: Rücksprung

- 120: Haken
- 122: Rastnase
- 124: Rippenaufnahmen
- 126: Nut
- 128: Kerben
- 129: Steg

- 140: Federzungen
- 142: Griffkerben

- 500: Lichtstrahl

- A: Längsachse
- LED: Leuchtdiode

## Patentansprüche

1. Werkzeug mit einem Handgriff (10), einem Werkzeugschaft (30) und einem Lichtleiter (50), wobei
der Handgriff (10) drehfest mit dem Werkzeugschaft (30) verbunden ist und
der Handgriff (10) eine Beleuchtungseinrichtung (20) aufweist,
**dadurch gekennzeichnet, dass**
der Werkzeugschaft (30) mit dem an ihm unlösbar verbundenen Lichtleiter (50) auswechselbar in den Handgriff (10) eingesetzt ist.

2. Werkzeug nach Anspruch 1,
**dadurch gekennzeichnet, dass**
der Handgriff (10) den Lichtleiter (50) formschlüssig aufnimmt.

3. Werkzeug nach einem der Ansprüche 1 oder 2,
**dadurch gekennzeichnet, dass**
der Lichtleiter (50) aus aufgespritztem Kunststoff besteht.

4. Werkzeug nach einem der Ansprüche 1 bis 3,
**dadurch gekennzeichnet, dass**
der Lichtleiter (50) den Werkzeugschaft (30) in einem Bereich, der an einem der Beleuchtungseinrichtung (20) zugewandten Ende beginnt, vollumfänglich umgibt.

5. Werkzeug nach einem der vorangehenden Ansprüche,
**dadurch gekennzeichnet, dass**
der Werkzeugschaft (30) ein der Beleuchtungseinrichtung (20) zugewandtes Ende (34) mit einem sich verjüngenden Querschnitt aufweist.

6. Werkzeug nach Anspruch 5,
**dadurch gekennzeichnet, dass**
das Ende (34) als eine Spitze ausgebildet ist.

7. Werkzeug nach einem der vorangehenden Ansprüche,
**dadurch gekennzeichnet, dass**
die Beleuchtungseinrichtung (20) eine Spannungsquelle, eine Lichtquelle, eine Verkabelung und einen Schalter (22) in einer auswechselbaren Baugruppe aufweist.

8. Werkzeug nach einem der vorangehenden Ansprüche,
**dadurch gekennzeichnet, dass**
die Beleuchtungseinrichtung (20) eine Leuchtdiode (LED) als Lichtquelle aufweist.

9. Werkzeug nach einem der vorangehenden Ansprüche,
**dadurch gekennzeichnet, dass** der Handgriff (10) eine Schalthülse (70) aufweist, mittels derer die Beleuchtungseinrichtung (20) betätigbar ist.

10. Werkzeug nach einem der vorangehenden Ansprüche,
**dadurch gekennzeichnet, dass**
die Beleuchtungseinrichtung (20) im Handgriff (10) axial fixiert ist.

11. Werkzeug nach einem der vorangehenden Ansprüche,
**dadurch gekennzeichnet, dass** der Lichtleiter (50) die Beleuchtungseinrichtung (20) in axialer Richtung von dem Werkzeugschaft (30) beabstandet.

12. Werkzeug nach einem der vorangehenden Ansprüche,
**dadurch gekennzeichnet, dass**
der Werkzeugschaft (30) beschichtet, insbesondere verchromt ist.

13. Werkzeug nach einem der vorangehenden Ansprüche,
**dadurch gekennzeichnet, dass**
der Lichtleiter (50) beschichtet, insbesondere galvanisiert ist.

14. Werkzeug nach einem der vorangehenden Ansprüche,
**dadurch gekennzeichnet, dass**
der Handgriff (10) innen beschichtet, insbesondere galvanisiert ist.

15. Werkzeug nach einem der vorangehenden Ansprüche,
**dadurch gekennzeichnet, dass**
ein nahezu vollständig umlaufender Luftspalt (60) radial zwischen dem Handgriff (10) und dem Lichtleiter (50) ausgebildet ist.

16. Werkzeug nach einem der vorangehenden Ansprüche,
**dadurch gekennzeichnet, dass**
radial zwischen dem Handgriff (10) und dem Lichtleiter (50) mindestens ein sich in axialer Richtung erstreckender Steg (129) angeordnet ist.

17. Werkzeug nach einem der vorangehenden Ansprüche,
**dadurch gekennzeichnet, dass**
die Beleuchtungseinrichtung (20) auswechselbar, insbesondere durch das zweite Handgriffende (18) hindurch entfernbar, im Handgriff (10) aufgenommen ist.

18. Werkzeug nach einem der vorangehenden Ansprüche,
**dadurch gekennzeichnet, dass**
das Werkzeug elektrisch ableitend ausgeführt ist und aus mindestens einem leitfähigen Material besteht.

19. Werkzeug nach einem der Ansprüche 1 bis 17,
**dadurch gekennzeichnet, dass** das Werkzeug über nahezu seine gesamte Oberfläche isolierend ausgeführt ist.

20. Werkzeugschaft (30) für ein Werkzeug nach einem der vorangehenden Ansprüche.

21. Werkzeugschaft (30) nach Anspruch 20,
**dadurch gekennzeichnet, dass**
der Werkzeugschaft (30) über einen Rastmechanismus in dem Handgriff (10) verriegelbar ist.

22. Handgriff (10) für ein Werkzeug nach Anspruch 1,
**dadurch gekennzeichnet, dass** der Handgriff (10) eine Öffnung (110) aufweist, in welche
der Werkzeugschaft (30) oder eine Linse auswechselbar einsetzbar sind.
